# EUROPÄISCHE PATENTANMELDUNG

(11) **EP 2 602 023 A1**
(43) Veröffentlichungstag der Anmeldung: **12.06.2013**
(21) Anmeldenummer: 11192403.1
(22) Anmeldetag: 07.12.2011
(51) Int. Cl.: B01J 31/02, C08G 18/18

(54) **Katalysatorkombination zur Herstellung von Polyurethanschaumstoffformkörpern**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft eine Katalysatorkombination, enthaltend ein Carbonsäuresalz einer Immidazoliumverbindung und ein tertiäres Amin und ein Verfahren zur Herstellung von Polyurethanschaumstoffformkörpern bei dem man (a) organische Polyisocyanate mit (b) Polyolen, (c) Treibmitteln, enthaltend Wasser, (d) Katalysator, enthaltend ein Carbonsäuresalz einer Immidazoliumverbindung und ein tertiäres Amin und gegebenenfalls (e) Kettenverlängerungsmitteln und/oder Vernetzungsmitteln, und (f) sonstigen Hilfsmitteln und/oder Zusatzstoffen, zu einer Reaktionsmischung vermischt, in eine Form gibt und zu einem Polyurethanschaumstoffformkörper ausreagieren lässt. Weiter betrifft die vorliegende Erfindung Polyurethanschaumstoffformkörper, insbesondere Polyurethanintegralschaumstoffe, erhältlich nach einem solchen Verfahren sowie die Verwendung dieser Polyurethanformkörper als Schuhsohlen, Automobilinnenteile oder in der Möbelindustrie.

## Beschreibung

Die vorliegende Erfindung betrifft eine Katalysatorkombination, enthaltend ein Carbonsäuresalz einer Immidazoliumverbindung und tertiäres Amin und ein Verfahren zur Herstellung von Polyurethanschaumstoffformkörpern bei dem man (a) organische Polyisocyanate mit (b) Polyolen, (c) Treibmitteln, enthaltend Wasser, (d) Katalysator, enthaltend ein Carbonsäuresalz einer Immidazoliumverbindung und ein tertiäres Amin und gegebenenfalls (e) Kettenverlängerungsmitteln und/oder Vernetzungsmitteln, und (f) sonstigen Hilfsmitteln und/oder Zusatzstoffen, zu einer Reaktionsmischung vermischt, in eine Form gibt und zu einem Polyurethanschaumstoffformkörper ausreagieren lässt. Weiter betrifft die vorliegende Erfindung Polyurethanschaumstoffformkörper, insbesondere Polyurethanintegralschaumstoffe, erhältlich nach einem solchen Verfahren sowie die Verwendung dieser Polyurethanformkörper als Schuhsohlen, Automobilinnenteile oder in der Möbelindustrie.

Polyurethanschaumstoffformkörper sind bekannt und werden üblicherweise in Automobilinnern, beispielsweise als Lenkräder, Kopfstützen oder Schaltgriffe, als Schuhsohlen oder in der Möbelindustrie, beispielsweise als Armlehnen eingesetzt. Zur Herstellung dieser Polyurethanintegralschaumstoffformkörper ist es wichtig, dass diese innerhalb von kurzer Zeit aus den Formen genommen werden können, da so die Zykluszeit erhöht werden kann. Dies ermöglicht eine deutlich effizientere Herstellung der Polyurethanschaumstoffformteile.

Meist erfolgt die Herstellung der Polyurethanschaumstoffformteile unter Verwendung von Wasser als Treibmittel. Damit ein stabiler Schaum, insbesondere ein Schaumstoffformkörper mit Integralstruktur, erhalten werden kann muss die Treibreaktion zwischen Isocyanat und dem Treibmittel Wasser sowie die Polyurethanreaktion zwischen Isocyanat und Polyol genau abgestimmt sein. Ebenso ist es wichtig, dass die Fließzeiten ausreichend lang sind, damit eine vollständige Formfüllung erfolgen kann, während die Knickzeit, bei der ein Formkörper ohne irreversible Zerstörung geknickt werden kann, und damit ein Entformen möglich ist, möglichst kurz sein soll.

Zur Einstellung dieser komplizierten Reaktionsparameter hat sich der Einsatz einer Katalysatorkombination aus tertiärem Aminkatalysator und einem Metallkatalysator auf Zinnbasis, wie Zinndioktoat oder Dibutylzinndilaurat (DBTL) bewährt. Dies ist beispielsweise im "Kunststoff-handbuch, Band 7, Polyurethane", Carl Hansel Verlag, 3. Auflage 1993, Kapitel 3.4.1.3 beschrieben.

Gegenüber Zinnkatalysatoren werden Bedenken hinsichtlich deren Umweltverträglichkeit geltend gemacht. Daher gibt es Bestrebungen, Zinnkatalysatoren durch andere Katalysatoren zu ersetzen. Insbesondere bei der Herstellung von Polyurethanschaumstoffformteilen ist dies bisher noch nicht zufriedenstellend gelungen. Ferner weisen die Zinnverbindungen den Nachteil auf, dass diese ebenso die Startzeit des Systems beeinflussen. Durch die erhöhte Reaktivität des Systems wird die Startzeit reduziert, welches bei der Verarbeitung solcher Systeme zu Problemen führen kann.

Katalytische Eigenschaften von Imidazoliumverbindungen bei der Herstellung von Polyurethanen sind bekannt. So beschreibt beispielsweise JP 2002020686 die Herstellung von Polyurethanbeschichtungen unter Verwendung einer aromatischen, Polyaminverbindung sowie einem Immidazol und einer organischen Säure.

J P 2002060684 beschriebt die Herstellung von Polyurethansprühbeschichtungen unter Verwendung einer aromatischen, Polyaminverbindung sowie einem Immidazol und einer organischen Säure.

WO 2009016322 beschreibt den Einsatz von Carbenen als Katalysator von Polyurethaenen. Dabei sind auch Carbene auf Basis von Imidazol genannt. Gemäß WO 2009016322 kann das Carben auch in situ durch Reaktion mit einer starken Base bei der Polyurethanreaktion hergestellt werden. Nachteilig ist dabei, dass sich katalytisch aktive Carbene nur mit sehr großem Aufwand, beispielsweise unter Schutzgas Argon in Tetrahydrofuran als Lösungsmittel herstellen lassen Auch sind Stabilisierende Gruppen in der Nachbarschaft des Carbens, wie armoatische Gruppen, nötig, um dieses so zu stabilisieren, dass es einen katalytischen Effekt haben kann.

WO 2007/090755 beschreibt die Verwendung von Salzen einer Imidazoliumverbindungen als Additiv zur Erzielung einer antistatischen Wirkung. Der Einsatz dieser Imidazoliumsalze für zur keiner wesentlichen Beeinflussung der Polyurethanreaktivsysteme.

Aufgabe der vorliegenden Erfindung war es daher eine zinnfreie Katalysatorkombination zur Herstellung von Polyurethanintegralschaumstoffformteilen zu liefern, die eine rasche Entformzeit erlaubt, wobei die erhaltenen Polyurethanschaumstoffformteile hervorragende mechanische Eigenschaften aufweisen, die insbesondere gegenüber dem Einsatz von üblichen Katalysatorkombinationen möglichst nicht beeinträchtigt sind. Weiter war es Aufgabe der vorliegenden Erfindung ein zinnfreies Verfahren zur Herstellung von Polyurethanschaumstoffformkörpern sowie zinnfreie Polyurethanschaumstoffformkörper mit hervorragenden mechanischem Eigenschaften zu liefern.

Die erfindungsgemäße Aufgabe wird gelöst durch eine Katalysatorkombination, enthaltend ein Carbonsäuresalz einer Immidazoliumverbindung und ein tertiäres Amin und ein Verfahren zur Herstellung von Polyurethanschaumstoffformkörpern bei dem man (a) organische Polyisocyanate mit (b) Polyolen, (c) Treibmitteln, enthaltend Wasser, (d) Katalysator, enthaltend ein Carbonsäuresalz einer Immidazoliumverbindung und ein tertiäres Amin und gegebenenfalls (e) Kettenverlängerungsmitteln und/oder Vernetzungsmitteln, und (f) sonstigen Hilfsmitteln und/oder Zusatzstoffen, zu einer Reaktionsmischung vermischt, in eine Form gibt und zu einem Polyurethanschaumstoffformkörper ausreagieren lässt.

Dabei umfasst das erfindungsgemäß eingesetzte Carbonsäuresalz einer Innidazoliumverbindung ein Imidazoliumkation und ein Carboxylatanion, wobei das Imidazoliumkation vorzugsweise einfach positiv und das Carbonsäureanion einfach negativ geladen ist. Werden als Carboxylatanionen Anionen höherer Carbonsäuren verwendet kann auch eine Carbonsäure als Anion für mehrere Imidazoliumkationen fungieren, um deren Ladung auszugleichen. Vorzugsweise wird als Imidazoliumkation mindestens eine Verbindung gemäß der allgemeinen Formel (1) eingesetzt:

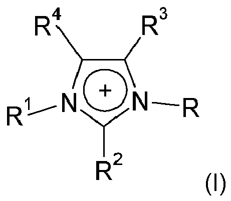

Dabei steht der Rest R für Wasserstoff, einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen; und die Reste R¹ bis R⁴ unabhängig voneinander jeweils für Wasserstoff, eine Sulfo-Gruppe oder einen organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen, wobei die Reste R², R³ und R⁴ zusätzlich auch für Halogen oder eine funktionelle Gruppe stehen können; oder

zwei benachbarte Reste aus der Reihe R¹ bis R⁴ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen.

Als Heteroatome kommen bei der Definition der Reste R und R¹ bis R⁴ prinzipiell alle Heteroatome in Frage, welche in der Lage sind, formell eine -CH₂-, eine -CH=, eine -C≡ oder eine =C= -Gruppe zu ersetzen. Enthält der Kohlenstoff enthaltende Rest Heteroatome, so sind Sauerstoff, Stickstoff, Schwefel, Phosphor und Silizium bevorzugt. Als bevorzugte Gruppen seien insbesondere -O-, -S-, -SO-, -SO₂-, -NR'-, -N=, -PR'-, -PR'₂ und -SiR'₂- genannt, wobei es sich bei den Resten R' um den verbleibenden Teil des Kohlenstoff enthaltenden Rests handelt. Die Reste R², R³ und R⁴ können auch direkt über das Heteroatom gebunden sein.

Als funktionelle Gruppen kommen prinzipiell alle funktionellen Gruppen in Frage, welche an ein Kohlenstoffatom oder ein Heteroatom gebunden sein können. Als geeignete Beispiele seien - OH (Hydroxy), =O (insbesondere als Carbonylgruppe), -NH₂ (Amino), =NH (Imino), -COOH (Carboxy), -CONH₂ (Carboxamid), -SO₃H (Sulfo) und -CN (Cyano) genannt. Fuktionelle Gruppen und Heteroatome können auch direkt benachbart sein, so dass auch Kombinationen aus mehreren benachbarten Atomen, wie etwa -O- (Ether), -S- (Thioether), -COO- (Ester), -CONH-(sekundäres Amid) oder-CONR'- (tertiäres Amid), mit umfasst sind, beispielsweise Di-(C₁-C₄-Alkyl)-amino, C₁-C₄-Alkyloxycarbonyl oder C₁-C₄-Alkyloxy.

Als Halogene seien Fluor, Chlor, Brom und lod genannt.

Bevorzugt steht der Rest R für Wasserstoff, unverzweigtes und unsubstituiertes C₁- bis C₁₈-Alkyl, wie beispielsweise Methyl, Ethyl, 1-Propyl, 1-Butyl, 1-Pentyl, 1-Hexyl, 1-Heptyl, 1-Octyl, 1-Decyl, 1-Dodecyl, 1-Tetradecyl, 1-Hexadecyl, 1-Octadecyl, besonders bevorzugt für Wasserstoff, Methyl, Ethyl, 1-Butyl und 1-Octyl sowie für CH₃O-(CH₂CH₂O)ₙ-CH₂CH₂- und CH₃CH₂O-(CH₂CH₂O)ₙ-CH₂CH₂- mit n gleich 0 bis 3 und Insbesondere für Wasserstoff.

Bevorzugt stehen die Reste R¹ bis R⁴ unabhängig voneinander jeweils für Wasserstoff; Halogen; eine funktionelle Gruppe, insbesondere solcher, wie oben genannt; gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes C₁-C₁₈-Alkyl; gegebenenfalls durch funktionelle Gruppen, Aryl, Alkyl, Aryloxy, Alkyloxy, Halogen, Heteroatome und/oder Heterocyclen substituiertes und/oder durch ein oder mehrere Sauerstoff-und/oder Schwefelatome und/oder ein oder mehrere substituierte oder unsubstituierte Iminogruppen unterbrochenes C₂-C₁₈-Alkenyl; gegebenenfalls durch funktionelle Gruppen, Aryl, Alkyl, Aryloxy, Alkyloxy, Halogen, Heteroatome und/oder Heterocyclen substituiertes C₆-C₁₂-Aryl; gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkyl; gegebenenfalls durch funktionelle Gruppen, Aryl, Alkyl, Aryloxy, Alkyloxy, Halogen, Heteroatome und/oder Heterocyclen substituiertes C₅-C₁₂-Cycloalkenyl; oder einen gegebenenfalls durch funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus bedeuten; oder zwei benachbarte Reste zusammen für einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring.

Besonders bevorzugt stehen die Reste R¹ bis R⁴ unabhängig voneinander für Wasserstoff; unverzweigtes oder verzweigtes, unsubstituiertes oder ein bis mehrfach mit Hydroxy, Halogen, Phenyl, Cyano, C₁- bis C₆-Alkoxycarbonyl und/oder Sulfonsäure substituiertes C₁- bis C₁₈-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, 2-Hydroxyethyl, Benzyl, 3-Phenylpropyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl, Undecylfluorisopentyl, 6-Hydroxyhexyl und Propylsulfonsäure; Glykole, Butylenglykole und deren Oligomere mit 1 bis 100 Einheiten und einem Wasserstoff oder einem C₁- bis C₈-Alkyl als Endgruppe, wie beispielsweise R^{A-} O-(CHR^{B}-CH₂-O)ₙ-CHR^{B}-CH₂- oder R^{A}O-(CH₂CH₂CH₂CH₂O)ₙ-CH₂CH₂CH₂CH₂O- mit R^{A} und R^{B} bevorzugt Wasserstoff, Methyl oder Ethyl und n bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl; Vinyl; und N,N-Di-C₁- bis C₆-alkyl-amino, wie beispielsweise N,N-Dimethylamino und N,N-Diethylamino.

Ganz besonders bevorzugt stehen die Reste R¹ bis R⁴ unabhängig voneinander für Wasserstoff oder C₁- bis C₁₈-Alkyl, wie beispielsweise Methyl, Ethyl, 1-Butyl, 1-Pentyl, 1-Hexyl, 1-Heptyl, 1-Octyl, für Phenyl, für 2-Hydroxyethyl, für 2-Cyanoethyl, für 2-(Methoxycarbonyl)ethyl, für 2-(Ethoxycarbonyl)ethyl, für 2-(n-Butoxycarbonyl)ethyl, für N,N-Dimethylamino, für N,N-Diethylamino, für Chlor sowie für CH₃O-(CH₂CH₂O)ₙ-CH₂CH₂- und CH₃CH₂O-(CH₂CH₂O)ₙ-CH₂CH₂- mit n gleich 0 bis 3.

Als ganz besonders bevorzugte Imidazoliumionen sind 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethyl-imidazolium, 1-(1-Hexyl)-3-butyl-imidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazolium, 1-(1-Hexadecyl)-3-methylimidazolium, 1-(1-Hexadecyl)-3-ethylimidazolium, 1-(1-Hexadecyl)-3-butylimidazolium, 1-(1-Hexadecyl)-3-octylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)-2,3-dimethylimidazolium, 1,4-Dimethylimidazolium, 1,3,4-Trimethylimidazolium, 1,4-Dimethyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium und 1,4,5-Trimethyl-3-octylimidazolium. Insbesondere ist das Imidazoliumkation 1-Ethyl-3-methylimidazolium.

Als Carboxylatanionen können Anionen einer oder mehrerer, beliebiger, substituierter oder unsubstituierter, aliphatischer, cycloaliphatischer oder aromatischer Mono-, Di- Tri- oder Polycarbonsäuren verwendet werden. Vorzugsweise werden Carboxylatanionen Anionen von Carbonsäuren mit weniger als 10 Kohlenstoffatomen, insbesondere solcher Carbonsäuren, die bei Raumtemperatur flüssig sind, eingesetzt. Diese können unsubstituiert oder substituiert sein, wobei mögliche Substituenten Hydroxylgruppen, Aminogruppen oder Halogene umfassen. Vorzugsweise sind die Carboxylatanionen unsubstituiert oder weisen einen oder mehrere Halogensubstituenten, insbesondere Fluorsubstituenten auf. Dabei sind Anionen der Ameisensäure, Essigsäure, Monofluoressigsäure, Difluoressigsäure, Trifluoressigsäure, substituierte oder unsubstituierte Propionsäure oder substituierte oder unsubstituierte Buttersäure besonders bevorzugt, Insbesondere ist das Anion ein Acetatanion oder das Anion substituierter Essigsäure, ganz besonders bevorzugt ist das Acetatanion.

Die Herstellung des erfindungsgemäß eingesetzten Carbonsäuresalzes einer Imidazoliumverbindung sind bekannt und können besipielsweise unter dem Handelsnamen Basionic® BC01 und BC02 der BASFoder bei spezialisiertem Anbietern von Ionischen Flüssigkeiten wie zum Beispiel io-li-tec käuflich erworben werden.

Neben dem Carbonsäuresalz der Imidazoliumverbindung enthält die erfindungsgemäße Katalysatorkombination mindestens ein tertiäres Amin. Vorzugsweise wird als tertiäres Amin eine tertiäre Aminogruppe enthaltende Verbindung eingesetzt, die die Reaktion von Isocyanat mit Polyolen (b) oder Kettenverlängerungs- und/oder Vernetzungsmitteln (e) beschleunigt. Besonders bevorzugt ist diese Substanz ein bekanner Katalysator für Polyurethane. Dieser umfasst vorzugsweise mindestens eine Verbindung, ausgewählt aus der Gruppe, bestehend aus Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan, 1,4-Diaza-bicyclo-(2,2,2)-octan, 1,8-Diazabicyclo [5.4.0] undec-7-en (DBU). Insbesondere wird als tertiäres Amin 1,4-Diaza-bicyclo-(2,2,2)-octan eingesetzt.

Dabei beträgt der Anteil des Carbonsäuresalzes einer Imidazoliumverbindung vorzugsweise 0,01 bis 2,5 Gew.-%, besonders bevorzugt 0,05 bis 1,5 Gew.-% und insbesondere 0,1 bis 1,0 Gew.-%, bezogen auf das Gesamtgewicht der Komponenten (b) bis (e).

Vorzugsweise ist dabei das das Gewichtsverhältnis zwischen dem Carbonsäuresalz der Immidazoliumverbindung und dem tertiären Amin 1: 50 bis 2:1, vorzugsweise 1:25 bis 1:1, besonders bevorzugt 1:15 bis 1:1 und insbesondere 1:10 bis 1:2.

Die Erfindungsgemäße Katalysatorkombination wird in einem Verfahren zur Herstellung von Polyurethanschaumstoffformkörpern eingesetzt. Das erfindungsgemäße Verfahren umfasst das Vermischen von (a) organischem Polyisocyanat mit (b) Polyol, (c) Treibmittel, enthaltend Wasser, (d) Katalysator, enthaltend Carbonsäuresalz einer Immidazoliumverbindung und tertiäres Amin und gegebenenfalls (e) Kettenverlängerungsmittel und/oder Vernetzungsmittel, und (f) sonstigen Hilfsmitteln und/oder Zusatzstoffen zu einer Reaktionsmischung, in eine Form geben der Reaktionsmischung und Ausreagieren lassen der Reaktionsmischung zu einem Polyurethanschaumstoffformkörper.

Polyurethanschaumstoffformkörper im Sinn der Erfindung sind vorzugsweise Polyurethanintegralschaumstoffe. Dabei versteht man unter Polyurethanintegralschaumstoffen PolyurethanSchaumstoffe nach DIN 7726 mit einer Randzone, die bedingt durch den Formgebungsprozess eine höhere Dichte als der Kern aufweist. Die über den Kern und die Randzone gemittelte Gesamtrohdichte liegt dabei vorzugsweise über 80 g/L bis 800 g/L besonders bevorzugt von 150 g/L bis 500 g/L.

Die zur Herstellung der erfindungsgemäßen Polyurethanintegralschaumstoffe verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind 4,4'-Metandiphenyldiisocyanat, 2,4'-Metandiphenyldiisocyanat, die Mischungen aus monomeren Metandiphenyldiisocyanaten und höherkernigen Homologen des Metandiphenyldiisocyanats (Polymer-MDI), Tetramethylendiisocyanat, Hexamethylendiisocyanat (HDI), Isophorondiisocyanat (IPDI), 2,4- oder 2,6-Toluylendiisocyanat (TDI) oder Mischungen der genannten Isocyanate.

Bevorzugt wird 4,4'-MDI verwendet. Das bevorzugt verwendete 4,4'-MDI kann 0 bis 20 Gew.-% 2,4' MDI und geringe Mengen, bis etwa 10 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymeren eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80°C, mit Polyolen (a-2), zum Prepolymer umgesetzt werden.

Polyole (a-2) sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole (a-2) die unter b) beschriebenen Polyole eingesetzt.

Gegebenenfalls werden den genannten Polyolen bei der Herstellung der Isocyanatprepolymere übliche Kettenverlängerer oder Vernetzungsmittel zugegeben. Solche Substanzen sind im Folgenden unter e) beschrieben.

Im Rahmen der vorliegenden Erfindung werden unter Polyolen Verbindungen mit mindestens zwei gegenüber Isocyanaten reaktiven Wasserstoffatomen verstanden, die ein Molekulargewicht von größer als 500 g/mol aufweisen. Das Molekulargewicht wird dabei über die OH-Zahl bestimmt. Diese umfassen beispielsweise Polyetherole und Polyesterole.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise, 1,3-Propylenoxid, 1,2- bzw. 2,3-Butylenoxid und vorzugsweise Ethylenoxid und 1,2-Propylenoxid. Des Weiteren kann Tetrahydrofuran Monomer eingesetzt werden. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polyetherpolyole, vorzugsweise Polyoxypropylen-polyoxyethylen-polyole, besitzen vorzugsweise eine Funktionalität von 1,7 bis 3 und Molekulargewichte von 1.000 bis 12.000, vorzugsweise von 1.500 bis 8.000 g/mol, insbesondere von 2.000 bis 6.000 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert.

Die erhaltenen Polyesterpolyole besitzen vorzugsweise eine Funktionalität von 2 bis 4, insbesondere von 2 bis 3, und ein Molekulargewicht von 480 bis 3000, vorzugsweise 1000 bis 3000 g/mol.

Als Polyole b) eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Hierbei handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im Allgemeinen durch Übertragung der Radikale von wachsenden Polymerketten auf Polyesterole oder Polyetherole. Das Polymer-Polyol enthält neben dem Propfcopolymerisaten überwiegend die Homopolymere der Olefine, dispergiert in unverändertem Polyesterol bzw. Polyetherol.

In einer bevorzugten Ausführungsform werden als Monomere Acrylnitril, Styrol, bevorzugt Acrylnitril und Styrol verwendet. Die Monomere werden gegebenenfalls in Gegenwart weiterer Monomere, eines Makromers, d.h. eines ungesättigten, radikalisch polymerisierbaren Polyols, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- bzw. Polyether- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist im Polyol b) Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Besonders bevorzugt ist der Anteil an Polymerpolyol größer als 5 Gew.-%, bezogen auf das Gesamtgewicht der Komponente (b). Die Polymerpolyole können beispielsweise, bezogen auf das Gesamtgewicht der Komponente (b) in einer Menge von 7 bis 90 Gew.-%, oder von 11 bis 80 Gew.-% enthalten sein. Besonders bevorzugt handelt es sich bei dem Polymerpolyol um Polymerpolyesterol oder Polymerpolyetherol.

Vorzugsweise werden als Polyole b) Mischungen, enthaltend Polyetherole eingesetzt. Dabei beträgt der Anteil von Polyetherolen an den Polyolen (b) vorzugsweise mindestens 30 Gew.-%, besonders bevorzugt mindestens 70 Gew.-% und insbesondere wird als Polyol (b) ausschließlich Polyetherol eingesetzt

Ferner sind bei der Herstellung von Polyurethanintegralschaumstoffen Treibmittel c) zugegen. Diese Treibmittel c) können Wasser enthalten. Als Treibmittel c) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel. Wird kein Wasser als Treibmittel eingesetzt, werden vorzugsweise ausschließlich physikalische Treibmittel verwendet.

Der Gehalt an Wasser beträgt in einer bevorzugten Ausführungsform von 0,1 bis 2 Gew.-%, bevorzugt 0,2 bis 1,5 Gew.-%, besonders bevorzugt 0,3 bis 1,2 Gew.-%, , bezogen auf das Gesamtgewicht der Komponenten a) bis e).

In einer weiteren bevorzugten Ausführungsform werden der Umsetzung der Komponenten a) bis e) als zusätzliches Treibmittel Mikrohohlkugeln, die physikalisches Treibmittel enthalten, zugegeben. Die Mikrohohlkugeln können auch im Gemisch mit den vorstehend genannten Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im Allgemeinen einen Durchmesser von 5 bis 50 µm auf. Beispiele für geeignete Mikrohohlkugeln sind unter dem Handelsnamen Expancell^{®} der Firma Akzo Nobel erhältlich.

Die Mikrohohlkugeln werden im Allgemeinen in einer Menge von 0,5 bis 5 Gew.-%, bezogen auf das Gesamtgewicht der Komponenten b), c) und e) zugesetzt.

Neben der erfindungsgemäßen Katalysatorkombination (d) können weitere, in der Polyurethanchemie übliche Katalysatoren zugegeben werden. Genannt seien beispielsweise Amidine, wie 2,3-Dimethyl-3,4,5,6-tetrahydropyrimidin. Ebenso kommen in Betracht organische Metallverbindungen, vorzugsweise Bismutcarboxylate, wie Bismut(III)-neodecanoat, Bismut-2-ethylhexanoat und Bismut-octanoat oder Mischungen davon. Vorzugsweise werden neben der erfindungsgemäßen Katalysatorkombination keine weiteren Metallkatalysatoren und insbesondere keine weiteren Katalysatoren eingesetzt.

Dabei beträgt der Anteil des Katalysators (d),insbesondere der erfindungsgemäßen Katalysatorkombination, bezogen auf das Gesamtgewicht der Verbindungen (b) bis (f) 0,01 bis 5 Gew.-%, besonders bevorzugt 0,1 bis 2 Gew.-% und insbesondere 0,2 bis 1,5 Gew.-%. Der Anteil des Carbonsäuresalzes einer Imidazoliumverbindung beträgt dabei vorzugsweise 0,001 bis 3 Gew.-%, besonders bevorzugt 0,01 bis 2,0 Gew.-% und insbesondere 0,05 bis 1,5 Gew.-%, jeweils bezogen auf das Gesamtgewicht der Komponenten (b) bis (f).

Als Kettenverlängerungsmittel und/oder Vernetzungsmittel e) werden Substanzen mit einem Molekulargewicht von vorzugsweise kleiner 500 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können bevorzugt einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (c) Monoethylenglycol, 1,4-Butandiol, Glycerin oder Mischungen davon eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten b) und e), zum Einsatz.

Der Reaktionsmischung zur Herstellung der Polyurethanschäume können gegebenenfalls auch noch Hilfsmittel und/oder Zusatzstoffe f) zugegeben werden. Genannt seien beispielsweise oberflächenaktive Substanzen, Schaumstabilisatoren, Zellregler, weitere Trennmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente b), eingesetzt.

Als geeignete weitere Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise enthalten erfindungsgemäße Reaktionsmischungen keine weiteren Trennmittel.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im Einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall-und insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten a) bis d), zugegeben.

Weiter ist Gegenstand der vorliegenden Erfindung ein Verfahren zur Herstellung eines Polyurethanintegralschaumstoffs bei dem die Komponenten a) bis d) und gegebenenfalls e) und/oder f) in solchen Mengen miteinander vermischt werden, dass das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25, vorzugsweise 1 : 0,9 bis 1 : 1,15 beträgt.

Die erfindungsgemäßen Polyurethanschaumstoffformkörper werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoff-handbuch", Band 7, Polyurethane, 3. Auflage, 1993, Kapitel 7.

Die Ausgangskomponenten a) bis d) und gegebenenfalls e und/oder f) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das Formwerkzeug eingebracht. Die Vermischung kann mechanisch mittels eines Rührers oder einer Rührschnecke oder unter hohem Druck im sogenannten Gegenstrominjektionsverfahren durchgeführt werden. Gegebenenfalls können auch die Komponenten (b) bis (f) ganz oder teilweise vor dem Vermischen mit den Isocyanaten (a) zu einer Polyolkomponente vereinigt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten a) bis f) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper aus Integralschaumstoffen eine Dichte von vorzugsweise 80 g/L bis 800 g/L besonders bevorzugt von 150 g/L bis 500 g/L. aufweisen. Die Verdichtungsgrade zur Herstellung der erfindungsgemäßen Polyurethanintegralschaumstoffe liegen im Bereich von 1,1 bis 8,5, vorzugsweise von 1,7 bis 7,0.

Die erfindungsgemäßen Polyurethanformkörper werden vorzugsweise als Schuhsohle und besonders bevorzugt als Zwischensohle, zum Beispiel für Straßenschuhe, Sportschuhe, Sandalen und Stiefel eingesetzt. Weiter können erfindungsgemäße Polyurethanschaumstoffe im Innenbereich von Verkehrsmitteln beispielsweise in Autos als Lenkräder, Kopfstützen oder Schaltknöpfe oder als Armlehnen verwendet. Weitere Verwendungsmöglichkeiten sind als Armlehne für Stühle, insbesondere für Bürostühle oder als Motorradsitze.

Im Folgenden soll die Erfindung anhand von Beispielen verdeutlicht werden.

### Beispiele

### Ausgangsmaterialien:

- Polyol 1:: Propylenglycol-gestartetes Polyetherpolyol mit OH Zahl von 29 und uberwiegend primaren OH-Gruppen (Zusammensetzung 85% Propylenoxid, 15 % Ethylenoxid
- Polyol 2:: Glycerin-gestartetes Polyetherpolyol mit OH Zahl von 27 und uberwiegend primaren OH-Gruppen (Zusammensetzung 80% Propylenoxid, 20 % Ethylenoxid)
- Polyol 3:: Polymerpolyetherol mit OH Zahl von 20 (Styrol/Acrylnitril-Partikel) dispergiert in einem Glycerin-gestarteten Polyetherpolyol mit OH Zahl von 35 und überwiegend pri- maren OH-Gruppen (Zusammensetzung 85% Propylenoxid, 15 % Ethylenoxid) und einem gewichtsmäßigem Feststoffgehalt von 45%

KV 1: Monoethylenglycol
KV 2: 1,4-Butandiol
   - Katalysator 1:: Triethylendiamin in Butandiol (25 Gew.-%)
   - Katalysator 2:: Pentamethyldipropylen triamin (Niax C77)
   - Katalysator 3:: Fomrez UL28 (Zinnkatalysator)
   - Katalysator 4:: 1-Butyl-3-methyl imidazolium acetat (erfindungsgemäß)
   - Katalysator 5:: 1-Ethyl-3-Methylimmidazolium acetat (erfindungsgemäß)
   - Katalysator 6:: Tetrabuthylammonium acetat
   - Katalysator 7:: Kalium acetat (40%) in Monoethylenglycol
   - Katalysator 8:: 1-ethyl-3-methyl imidazolium dicyanamid
   - Katalysator 9:: 1-ethyl-3-methyl imidazolium tetrafluoroborate

   - Stabi:: DC 193® der Firma Dow Corning, silikonbasiert
   - Treibmittel:: Wasser
   - ISO 1:: Prepolymer aus 50 Gew.-Teilen 4,4' Diisocyanatodiphenylmethan, 2 Gew.-Teilen uretoniminmodifiziertes 4,4' Diisocyanatodiphenylmethan, 46 Gew.-Teilen eines linearen propylenglycol-gestarteten Polyoxypropylenetherols mit einer OH-Zahl von55 mg KOH/g und 2 Gew.-Teilen Tripropylenglycol

### Durchführung der Versuche Vergleichsbeispiele (VB) 1-7 und der erfindungsgemäßen Beispiele (EB) 1-8

Die Polyolmischungen und Prepolymerkomponente wurden auf 35°C temperiert. 100 Gew.-Teile der Polyolkomponente wurden mit einer entsprechenden Menge der Isocyanatkomponente (ISO 1) mittels eines Vollrathrührers vermischt. Diese Mischung wurde in eine auf 55 °C temperierte Aluminiumform (200 x 200 x 10 mm) gegeben und die Form geschlossen. Nach 2 Minuten wurde die Form geöffnet und die Prüfplatte entnommen um die Knickzeit zu ermittelt. Dabei ist Knickzeit so definiert, das ein biegen einer Ecke um 180° zu keinen Bruch bzw. einreißen der Oberfläche der Platte führt. Die Zeit bei der dieser Zustand erreicht ist wird als Knickzeit bezeichnet. Die Start-, Steig- und Abbindezeit wurden an einem freigeschäumten Material ermittelt. Die nachfolgende Tabelle gibt zu Zusammensetzung der verschiedenen Polyolkomponenten bzw. die Mischungsverhältnisse und Ergebnisse wieder.

| | VB 1 | VB 2 | VB 3 | EB 1 | EB 2 | EB3 | EB4 | VB 4 | VB 5 | VB 6 | VB 7 |
|---|---|---|---|---|---|---|---|---|---|---|---|
| Polyol 1 | 33,30 | 33,30 | 33,30 | 33,30 | 33,30 | 33,30 | 33,30 | 33,30 | 33,30 | 33,30 | 33,3 |
| Polyol 2 | 38,20 | 38,20 | 38,20 | 38,20 | 38,20 | 38,20 | 38,20 | 38,20 | 38,20 | 38,20 | 38,20 |
| Polyol 3 | 10,00 | 10,00 | 10,00 | 10,00 | 10,00 | 10,00 | 10,00 | 10,00 | 10,00 | 10,00 | 10,00 |
| KV 1 | 0,70 | 0,70 | 0,70 | 0,70 | 0,70 | 0,70 | 0,70 | 0,70 | 0,62 | 0,70 | 0,70 |
| KV 2 | 14,6 | 12,35 | 12,35 | 12,35 | 12,35 | 12,35 | 12,35 | 12,35 | 12,35 | 12,35 | 12,35 |
| Kat 1 | | 3,00 | 3,00 | 3,00 | 3,00 | 3,00 | 3,00 | 3,00 | 3,00 | 3,00 | 3,00 |
| Kat 2 | 0,29 | 0,29 | 0,29 | 0,29 | 0,29 | 0,29 | 0,29 | 0,29 | 0,29 | 0,29 | 0,29 |
| Kat 3 | | | 0,04 | | | | | | | | |
| Kat 4 | | | | 0,10 | 0,25 | | | | | | |
| Kat 5 | | | | | | 0,1 | 0,25 | | | | |
| Kat 6 | | | | | | | | 0,25 | | | |
| Kat 7 | | | | | | | | | 0,12 | | |
| Kat 8 | | | | | | | | | | 2,00 | |
| Kat 9 | | | | | | | | | | | 2,00 |
| Stabi 1 | 0,30 | 0,30 | 0,30 | 0,30 | 0,30 | 0,30 | 0,30 | 0,30 | 0,30 | 0,30 | 0,30 |
| Wasser | 0,75 | 0,75 | 0,75 | 0,75 | 0,75 | 0,75 | 0,75 | 0,75 | 0,75 | 0,75 | 0,75 |

| | VB 1 | VB 2 | VB 3 | EB 1 | EB 2 | EB 3 | EB 4 | VB 4 | VB 5 | VB 6 | VB 7 |
|---|---|---|---|---|---|---|---|---|---|---|---|
| MV 100: | 133,5 | 133 | 133 | 131 | 131 | 132 | 132 | 131 | 133 | 130 | 130 |
| | | | | | | | | | | | |
| Startzeit [s] | 70 | 21 | 13 | 18 | 18 | 18 | 18 | 19 | 17 | 17 | 21 |
| Abbindezeit [s] | 230 | 38 | 24 | 35 | 31 | 35 | 31 | 40 | 39 | 36 | 36 |
| Steigzeit | 300 | 59 | 44 | 64 | 53 | 64 | 53 | 62 | 60 | 57 | 53 |
| Knickzeit [s] | > 600 | 300 | 150 | 190 | 160 | 190 | 160 | > 300 | 300 | 285 | 255 |

Wie aus den Beispielen und Vergleichsbeispielen ersichtlich ist, führt der Einsatz kleiner Mengen der erfindungsgemäßen Katalysatoren zu verbesserten Knickzeiten, die die Zeit angeben, zu der das Formteil aus der Form entnommen werden kann. Die so erreichten Entformzeilen sind ähnlich derer, die unter Einsatz von metallorganischen Katalysatoren erreicht werden. Ebenso ist aus den Beispielen ersichtlich, dass die Startzeit erfindungsgemäßen Beispiele im Vergleich zu dem System VB 3, welches Metallkatalysator auf Basis von Zinn enthält, absinkt. Dies ist Vorteilhaft bei der Herstellung von Polyurethanformkörpern, da die Reaktionsmischung so länger verarbeitet werden kann, wodurch beispielsweise Ablagerungen und Verstopfungen durch ausreagiertes Material in den Produktinsanlagen vermindert werden. Der Einsatz von Metallcarboxylaten (VB 5) oder quatarnären Ammoniumacetaten (VB 4) führt nicht zu den gewünschten Ergebnissen. Die Beispiele zeigen, dass in Kombination mit tertiären Aminen, bereits kleine Mengen der erfindungsgemäßen Carbonsäuresalze der Imidazoliumverbindungeneine sehr gute katalystische Akitivität aufweisen, welche Vergleichbar mit den der Kombination aus Aminen und Zinnverbindungen sind.

## Patentansprüche

1. Katalysatorkombination, enthaltend das Carbonsäuresalz einer Immidazoliumverbindung und ein tertiäres Amin.

2. Katalysatorkombination nach Anspruch 1 **dadurch gekennzeichnet, dass** das Immidazoliumkation der allgemeinen Formel 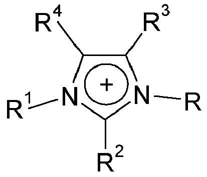 entspricht, wobei der Rest R steht für Wasserstoff, einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen; und die Reste R¹ bis R⁴ unabhängig voneinander jeweils für Wasserstoff, eine Sulfo-Gruppe oder einen organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen stehen, wobei die Reste R², R³ und R⁴ zusätzlich auch für Halogen oder eine funktionelle Gruppe stehen können; oder zwei benachbarte Reste aus der Reihe R¹ bis R⁴ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen stehen.

3. Katalysatorkombination nach Anspruch 1 oder 2, **dadurch gekennzeichnet, dass** das Immidazoliumkation ausgewählt ist aus der Gruppe, bestehend aus 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethylimidazolium, 1-(1-Hexyl)-3-butyl-imidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazolium, 1-(1-Hexadecyl)-3-methylimidazolium, 1-(1-Hexadecyl)-3-ethylimidazolium, 1-(1-Hexadecyl)-3-butylimidazolium, 1-(1-Hexadecyl)-3-octylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)-2,3-dimethylimidazolium, 1,4-Dimethylimidazolium, 1,3,4-Trimethylimidazolium, 1,4-Dimethyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium und 1,4,5-Trimethyl-3-octylimidazolium sowie beliebige Kombinationen daraus.

4. Katalysatorkombination nach Anspruch 3, **dadurch gekennzeichnet, dass** das Imidazoliumkation 1-Ethyl-3-methylimidazolium ist.

5. Katalysatorkombination nach einem der Ansprüche 1 bis 4, **dadurch gekennzeichnet, dass** das Carboxylatanion Accetat ist.

6. Katalysatorkombination nach einem der Ansprüche 1 bis 5, **dadurch gekennzeichnet, dass** das tertiäre Amin ausgewählt ist aus der Gruppe, bestehend aus Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan, 1,4-Diaza-bicyclo-(2,2,2)-octan, 1,8-Diazabicyclo[5.4.0]undec-7-en (DBU) sowie Mischungen dieser tertiären Amine.

7. Katalysatorkombination nach Anspruch 6, **dadurch gekennzeichnet, dass** das tertiäre Amin 1,4-Diaza-bicyclo-(2,2,2)-octan ist.

8. Katalysatorkombination nach einem der Ansprüche 1 bis 7, **dadurch gekennzeichnet, dass** das Gewichtsverhältnis zwischen dem Carbonsäuresalz der Immidazoliumverbindung und dem tertiären Amin 1:50 bis 2:1 beträgt.

9. Verfahren zur Herstellung von Polyurethanschaumstoffformkörpern bei dem man
a) organische Polyisocyanate mit
b) Polyolen,
c) Treibmitteln, enthaltend Wasser,
d) Katalysator, enthaltend eine Katalysatorkombination nach einem der Ansprüche 1 bis 8, und gegebenenfalls
e) Kettenverlängerungsmitteln und/oder Vernetzungsmitteln, und
f) sonstigen Hilfsmitteln und/oder Zusatzstoffen,
zu einer Reaktionsmischung vermischt, in eine Form gibt und zu einem Polyurethanschaumstoffformkörper ausreagieren lässt.

10. Verfahren nach Anspruch 9, **dadurch gekennzeichnet, dass** der Gehalt an Katalysator (d), bezogen auf das Gesamtgewicht der Verbindungen (b) bis (f) 0,1 bis 3 Gew.-% beträgt.

11. Verfahren Anspruch 9 oder 10, **dadurch gekennzeichnet, dass** der Anteil des Carbonsäuresalzes einer Imidazoliumverbindung 0,01 bis 1,5 Gew.-%, bezogen auf das Gesamtgewicht der Komponenten (b) bis (f) ist.

12. Polyurethanschaumstoffformkörper, erhältlich nach einem Verfahren gemäß einem der Ansprüche 9 bis 11.

13. Verwendung eines Polyurethanschaumstoffformkörpers nach Anspruch 12 als Schuhsohle, Lenkräder, Kopfstützen oder Schaltknöpfe oder als Stuhlarmlehnen.
